# EUROPÄISCHE PATENTSCHRIFT

(11) **EP 0 897 817 B1**
(45) Veröffentlichungstag und Bekanntmachung des Hinweises auf die Patenterteilung: **21.08.2002**
(21) Anmeldenummer: 98105585.8
(22) Anmeldetag: 27.03.1998
(51) Int. Cl.: B60J 3/02

(54) **Sonnenblende für Fahrzeuge**
Sun visor for vehicle
Pare-soleil pour véhicules

(30) Priorität: 23.07.1997 DE 19731535
(43) Veröffentlichungstag der Anmeldung: 24.02.1999
(73) Patentinhaber: Johnson Controls Interiors GmbH & Co. KG, 42285 Wuppertal (DE)
(72) Erfinder: Viertel, Lothar, 66802 Altforweiler (DE); Becker, Isabelle, 57150 Creutzwald (FR); Welter, Patrick, 57730 La Chambre (FR)
(74) Vertreter: Hemmelmann, Klaus

(56) Entgegenhaltungen:
- EP-A- 0 398 400
- DE-A- 3 004 254
- DE-A- 19 533 897
- US-A- 4 023 854

## Beschreibung

Die Erfindung bezieht sich auf eine Sonnenblende für Fahrzeuge gemäß dem Oberbegriff des Anspruchs 1, mit einem Sonnenblendenkörper, der im mittleren Bereich seiner oberen Längskante eine Ausnehmung aufweist, in welcher eine Lagervorrichtung angeordnet ist, die einen Achsenkörper mit in den Sonnenblendenkörper eingreifenden Achszapfen und eine den Achsenkörper klemmende Rastfeder aufweist, wie in DE 19533897 A1 offenbart.

Sonnenblenden der vorgenannten Art sind auch in anderen Ausführungsformen bekannt. Insoweit wird auf das deutsche Gebrauchsmuster Nr. 1 922 362 sowie auf die DE 30 04 254 A1 verwiesen. Der Nachteil bei den bekannten Sonnenblenden wird darin gesehen, daß der Sonnenblendenkörper bei Nichtgebrauch nicht sicher am Dachhimmel gehalten wird.

Aufgabe der Erfindung ist es, eine Sonnenblende der eingangs genannten Art zur Verfügung zu stellen, deren Sonnenblendenkörper auch unter extremen Wärme- oder Kältebelastungen oder auch starken Erschütterungen beim Fahrbetrieb sicher am Dachhimmel gehalten wird. Dabei wird weiterhin eine Lagervorrichtung angestrebt, die aus nur wenigen, einfach herzustellenden und zu montierenden Einzelteilen besteht.

Die zur Lösung dieser Aufgabe erfindungsgemäß vorgesehenen Maßnahmen sind im Anspruch 1 angegeben, während die Unteransprüche zweckmäßige Weiterbildungen und vorteilhafte Ausgestaltungen der Erfindung angeben.

Ein Ausführungsbeispiel der Erfindung wird im folgenden anhand der Zeichnungen näher erläutert, und es zeigen:

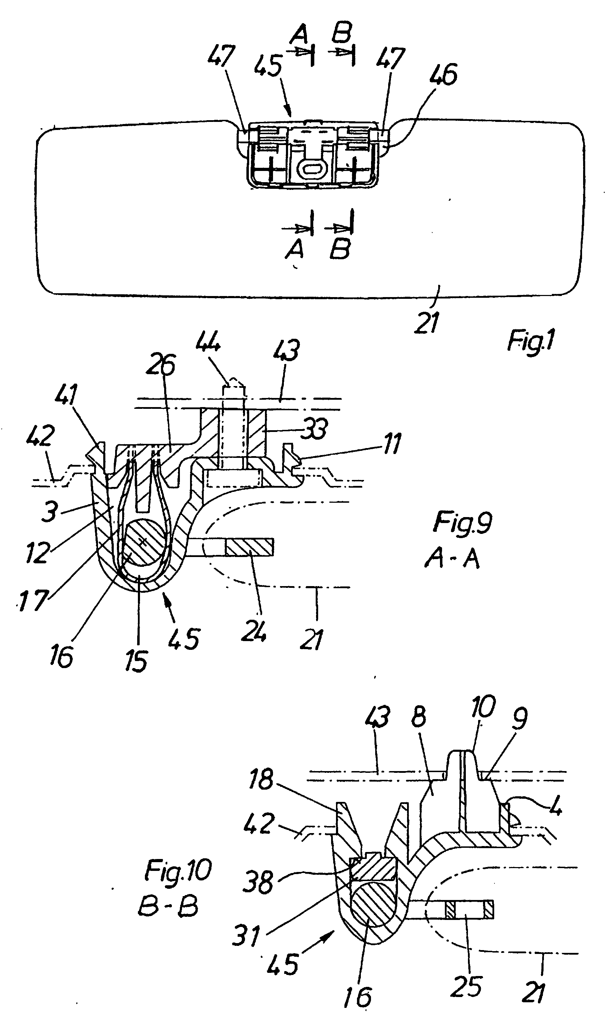

- Fig. 1: eine Sonnenblende mit Lagervorrichtung in Ansicht,

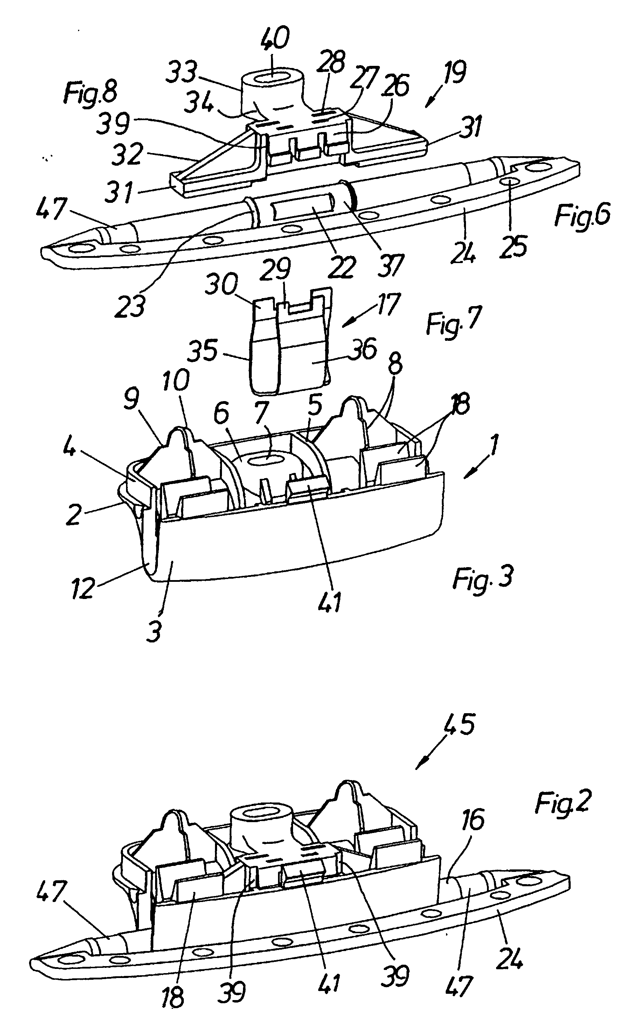

- Fig. 2: die komplette Lagervorrichtung in schaubildlicher Ansicht,
- Fig. 3: das Lagergehäuse der Lagervorrichtung nach Fig. 2 in schaubildlicher Ansicht,
- Fig. 4: eine Draufsicht auf das Lagergehäuse,
- Fig. 5: einen Schnitt C - C nach Fig. 4,
- Fig. 6: den Achsenkörper der Lagervorrichtung nach Fig. 2,
- Fig. 7: die Rastfeder,
- Fig. 8: einen Adapter

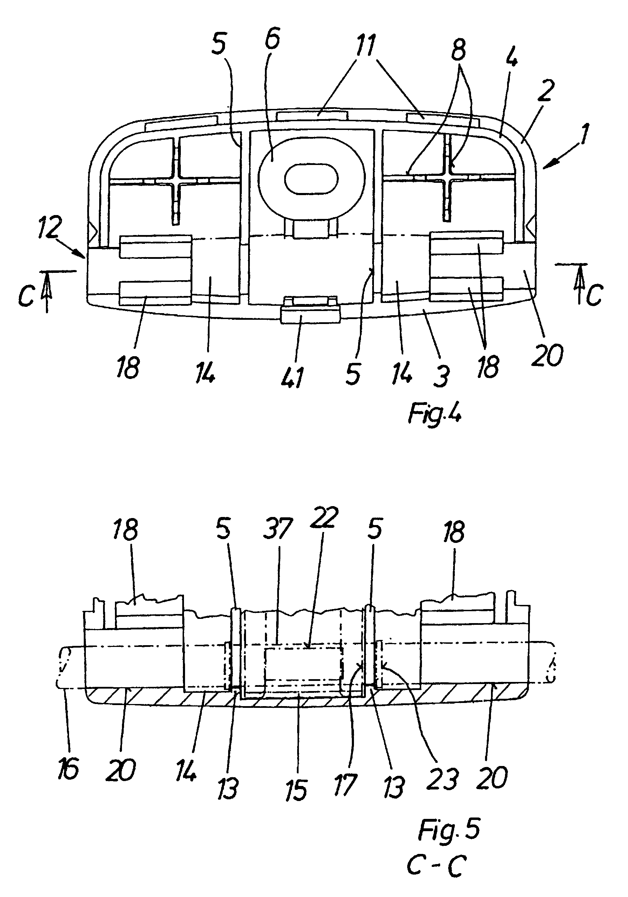

- Fig. 9: einen Schnitt A - A nach Fig. 1 und
- Fig. 10: einen Schnitt B - B nach Fig. 1.

Die Sonnenblende umfaßt einen als etwa rechteckige Platte ausgebildeten Sonnenblendenkörper 21 und die sowohl mit dem Sonnenblendenkörper 21 als auch der Fahrzeugkarosserie, von der mit strichpunktierten Linien ein Trägerteil 43 angedeutet ist, verbundene Lagervorrichtung 45, die in einer im mittleren Bereich der oberen Längskante des Sonnenblendenkörpers vorgesehenen Ausnehmung 46 plaziert ist.

Der Sonnenblendenkörper 21 kann aus PU, EPP, einem PP-Spritzling oder aus einem PP-Blasformkörper bestehen. Bei einer Ausbildung aus PU oder EPP (Schäumling) empfiehlt sich eine Umhüllung des Sonnenblendenkörpers 21 mit Dekormaterial, während man bei einem aus einem PP-Spritzling oder PP-Blasformkörper gebildeten Sonnenblendenkörper auch ohne eine Umhüllung auskommen kann.

Zur Lagervorrichtung 45 gehört zunächst ein Lagergehäuse 1, das ein Kunststoffspritzling ist und aus einer etwa rechteckigen Grundplatte 2 mit Verrundungen sowie einem daran ausgebildeten bzw. angeformten verrundeten U-förmigen Profil 3 besteht. Die Grundplatte 2 hat rückseitig einen senkrecht stehenden, zur Außenkontur versetzt und parallel verlaufenden Flansch 4, der an seiner Längsseite z. B. drei hinterschnittartige Nasen 11 aufweist sowie Verrippungen 5, die in den Kanal 12 des U-Profils 3 einlaufen und durch ihre Formgebung im Kanal 12 einen stufenartigen Absatz bzw. eine Erhöhung 13 bilden. Der Kanal 12 weist aus funktionalen Gründen weitere Materialabstufungen 14 und 15 auf. Im Inneren des Kanals 12 sind links und rechtsseitig sich gegenüberliegend nach außen hochstehende Klipsnasen 18 angebracht. An dem U-förmigen Profil 3 ist oberhalb und mittig eine örtliche Erhöhung 41, die aufgrund ihrer Formgebung als Rastnase dient.

Mittig der Grundplatte 2 ist ein topfartiger Einzug 6 mit ovalem Durchgangsloch 7 vorgesehen. Seitlich des topfartigen Einzugs 6 befinden sich, links und recht, aus gekreuzten Stegen 8 gebildete Positionierungsdome, die endseitig eine Abstufung 9 aufweisen und übergehen in einen kreisförmigen Zapfen 10 und als Anlage und Verdrehschutz dienen.

Zur Lagervorrichtung gehört ferner ein Achsenkörper 16, der vorzugsweise ein Kunststoffspritzling ist. Der Achsenkörper 16 hat einen zylinderischen Mittelteil 37 mit einseitig begrenzter Abflachung 22, die als Rastfläche für die noch zu beschreibende Rastfeder 17 dient und zwei ringartige Erhebungen 23 als Verschiebesicherung. Am Achsenkörper 16 sind zwei in den Sonnenblendenkörper 21 eingreifende Achszapfen 47 und ein ebenfalls in den Sonnenblendenkörper 21 eingreifender Flansch 24 angeformt. Der Flansch 24 weist zur Einlagerung und Verankerung im Sonnenblendenkörper 21 kreisförmige Durchdrückungen 25 auf.

Zur Lagervorrichtung gehört auch die schon erwähnte Rastfeder 17, die U-förmig ausgebildet ist und aus gehärtetem Metall besteht. Die Rastfeder 17 besitzt einen relativ breiten Federschenkel 35 und einen relativ schmalen Federschenkel 36. Die freien Enden der Federschenkel 35, 36 sind mit stegförmigen Absetzungen 29, 30 versehen.

Zur Lagervorrichtung gehört schließlich ein Adapter 19. Der Adapter 19 ist ein Kunststoffspritzling, bestehend aus einem etwa rechteckigen Mittelteil 26 mit im Bodenteil je zwei schlitzartigen Durchbrüchen 27 und 28 unterschiedlicher Dimensionierung. Die Durchbrüche 27 und 28 dienen zur Aufnahme der entsprechend ausgebildeten stegförmigen Absetzungen 29 und 30 der Rastfeder 17. An dem Mittelteil 26 sind links- und rechtsseitig kufenartige Ausbildungen 31 angeformt und durch Stege 32 stabilisiert. Des weiteren ist am Mittelteil 26 die Ausbildung einer ovalen Distanzhülse 33 mit ovalem Durchgangsloch 40 vorgesehen, wobei die Distanzhülse 33 mittels eines Stegs 34 am Mittelteil angebunden ist. Ferner sind die Eckkanten des Mittelteils 26 mit stufenartigen Ausbildungen 39 versehen.

Bei der Montage wird zunächst die Rastfeder 17 auf den dafür vorgesehenen Mittelteilbereich 37 des Achsenkörpers 16 aufgeschoben. Dabei gleitet der schmalere Federschenkel 36 in die Rastfläche 22 ein. Nun wird der Achsenkörper 16 mit Flansch 24 und der vormontierten Rastfeder 17 von oben in den offenen U-förmigen Kanal 12 des Lagergehäuses 1 eingedrückt. Dabei wird die Rastfeder 17 in den vorgesehenen Materialfreiraum 15 eingeführt und der Achsenkörper 16 erhält seine Lagerung im Bodenbereich 20, wobei die links- und rechtsseitigen erhabenen ringartigen Erhebungen 23 am Achsenkörper 16 in Verbindung mit den beiden Stegen 5 eine axiale Verschiebesicherung bewirken. Danach erfolgt die Montage des Adapters 19. Dieser wird mit seinen links- und rechtsseitigen kufenartigen Ausbildungen 31 den Klipsnasen 18 am Lagergehäuse 1 zugeführt und eingedrückt und dort durch den Hinterschnitt 38 der Klipsnasen 18 verrastet, wobei bei diesem Montagevorgang gleichzeitig die Rastfeder 17 zentriert und verriegelt wird. Der Adapter 19 wird dabei durch die an seinen vier Eckseiten des Mittelteils 26 befindlichen stufenartigen Absätze 39 über die beiden Verrippungen 5 im U-Kanal 12 zwangsgeführt und positioniert. Das Mitteilteil 26 des Adapters 19 nimmt mit seinen schlitzartigen Öffnungen 27 und 28 die stegförmigen Absetzungen 29, 30 der Rastfeder auf, so daß die Rastfeder 17 verriegelt ist. Ebenso findet die Distanzhülse 33 mit dem ovalen Durchgangsloch 40 ihre deckungsgleiche Positionierung an dem topfartigen Einzug 6 des Lagergehäuses 1. Der Achsenkörper 16 ist nun im U-Kanal 12 eingebettet und durch den Adapter 19 in allen Richtungen gesichert und die komplette Lagervorrichtung 45 ist am Sonnenblendenkörper 21 drehbar gelagert und angebunden.

Aufgrund des Lagerkonzepts ist es möglich, daß mittels der hinterschnittartigen Nasen 11 sowie der Erhöhung 41 und deren Ausbildung als Klipsnasen eine Vormontage (Lagervorrichtung 45 und Blendenkörper 21) an ein Trägerteil 42, z. B. einem Fertighimmel erfolgen kann. Damit besteht die Möglichkeit, eine Vormontagegruppe bei einem Kunden anzuliefern. Dort erfolgt dann die Endmontage im Fahrzeug. Die vorgesehenen gekreuzten Stege 8 stützen sich mit ihrer Abstufung 9 ebenso am KFZ-Blech (Trägerteil 43) ab wie die Distanzhülse 33 (als sogenannte Dreipunktanlage), wobei letztlich eine Schraube 44 zur definitiven Befestigung dient.

## Patentansprüche

1. Sonnenblende für Fahrzeuge mit einem Sonnenblendenkörper (21), der im mittleren Bereich seiner oberen Längskante eine Ausnehmung (46) aufweist, in welcher eine Lagervorrichtung (45) angeordnet ist, die einen Achsenkörper (16) mit in den Sonnenblendenkörper (21) eingreifenden Achszapfen (47) und eine den Achsenkörper (16) klemmende Rastfeder (17), sowie ein Lagergehäuse (1) zur Aufnahme der Rastfeder (17) und des Achsenkörpers (16) aufweist, **dadurch gekennzeichnet, daß** das Lagergehäuse (1) ferner zur Aufnahme eines an der Fahrzeugkarosserie befestigbaren Adapters (19) dient wobei der über Klipsverbindungen am Lagergehäuse (1) festgelegte Adapter (19) die Lagervorrichtung (45) und den damit über den Achsenkörper (16) klappbeweglich verbundenen Sonnenblendenkörper (21) trägt.

2. Sonnenblende nach Anspruch 1, **dadurch gekennzeichnet, daß** das Lagergehäuse (1) aus einer Grundplatte (2) sowie aus einem damit einstückig verbundenen U-förmigen Profil (3) besteht, dessen Basisschenkel eine Verrundung (20) aufweist.

3. Sonnenblende nach Anspruch 1 oder 2, **dadurch gekennzeichnet, daß** die Grundplatte (2) des Lagergehäuses (1) einen senkrecht stehenden, zur Außenkontur der Grundplatte versetzten und dazu parallel verlaufenden Flansch (4) aufweist, der an seiner Längsseite mit hinterschnittenen Nasen (11) versehen ist.

4. Sonnenblende nach wenigstens einem der Ansprüche 2 bis 3, **dadurch gekennzeichnet, daß** die Grundplatte (2) des Lagergehäuses (1) Verrippungen (5) aufweist, die ins Innere des U-förmigen Profils (3) einlaufen und Erhöhungen (13) bilden.

5. Sonnenblenden nach wenigstens einem der Ansprüche 2 bis 4, **dadurch gekennzeichnet, daß** die Wandungen des U-förmigen Profils (3) mit in den Profilkanal (12) hineinragenden Klipsnasen (18) zur Klipsbefestigung des Adapters (19) ausgebildet sind.

6. Sonnenblende nach wenigstens einem der Ansprüche 1 bis 5, **dadurch gekennzeichnet, daß** das Lagergehäuse (1) mit Hinterschneidungen und Vorsprüngen (11, 41) zur Vormontage der Lagervorrichtung (45) an einem Fertighimmel (42) oder dgl. ausgebildet ist.

7. Sonnenblende nach wenigstens einem der Ansprüche 2 bis 6, **dadurch gekennzeichnet, daß** die Grundplatte (2) einen topfartigen Einzug (6) mit einem ovalen Durchgangsloch (7) für eine auch den Adapter (19) durchsetzende Befestigungsschraube (44) aufweist und weiterhin mit Positionierungsdomen ausgebildet ist.

8. Sonnenblende nach wenigstens einem der Ansprüche 1 bis 7, **dadurch gekennzeichnet, daß** der Achsenkörper (16) einen zylinderischen Mittelteil (37) mit einseitig begrenzter Abflachung (22), die als Rastfläche für die Rastfeder (17) dient, zwei ringartige Erhebungen (23) als Verschiebesicherung, zwei in den Sonnenblendenkörper (21) eingreifende Achszapfen (47) und einen ebenfalls in den Sonnenblendenkörper (21) eingreifenden Flansch (24) aufweist.

9. Sonnenblende nach wenigstens einem der Ansprüche 1 bis 8, **dadurch gekennzeichnet, daß** die Rastfeder (17) U-förmig ausgebildet ist und einen Basisschenkel mit einer dem U-förmigen Profil (3) des Lagergehäuses (1) entsprechenden Rundung aufweist, daß ein Federschenkel (35) der Rastfeder (17) relativ breit und der andere Federschenkel (36) relativ schmal gehalten ist und daß die freien Enden der Federschenkel (35, 36) stegförmige Absetzungen (29, 30) aufweisen, die in Schlitzausnehmungen (27, 28) des Adapters (19) eingreifen.

10. Sonnenblende nach wenigstens einem der Ansprüche 2 bis 9, **dadurch gekennzeichnet, daß** der Adapter (19) aus einem etwa rechteckigen Mittelteil (26) mit den Schlitzausnehmungen (27, 28) und sich links und rechts daran anschließenden stufenartigen Formkörpern (31) zum Eingreifen in das U-förmigen Profil (3) und zum Hinterrasten der in den Profilkanal (12) hineinragenden Klipsnasen (18) besteht und eine Distanzhülse (33) und einem ovalen Durchgangsloch (40) für die Befestigungsschraube (44) aufweist.

## Claims

1. Sun visor for vehicles having a sun visor body (21) which has, in the central region of its upper longitudinal edge, a recess (46) in which a bearing device (45) is arranged, the said bearing device having a spindle body (16) with spindle pins (47) engaging in the sun visor body (21), and a latching spring (17) clamping the spindle body (16), and a bearing housing (1) for accommodating the latching spring (17) and the spindle body (16), **characterized in that** the bearing housing (1) also serves for accommodating an adapter (19) which can be fastened on the vehicle body, the adapter (19), which is fixed on the bearing housing (1) via clip connections, supporting the bearing device (45) and the sun visor body (21), which is connected in a swivelling manner to it via the spindle body (16).

2. Sun visor according to Claim 1, **characterized in that** the bearing housing (1) comprises a base plate (2) and a U-shaped profile (3) which is connected integrally thereto and whose base limb has a rounded portion (20).

3. Sun visor according to Claim 1 or 2, **characterized in that** the base plate (2) of the bearing housing (1) has a flange (4) which is vertical, is offset with respect to the outer contour of the base plate and runs parallel thereto and which is provided with undercut lugs (11) on its longitudinal side.

4. Sun visor according to at least one of Claims 2 to 3, **characterized in that** the base plate (2) of the bearing housing (1) has ribbings (5) which run into the interior of the U-shaped profile (3) and form elevations (13).

5. Sun visor according to at least one of Claims 2 to 4, **characterized in that** the walls of the U-shaped profile (3) are designed with clip lugs (18) which protrude into the profiled channel (12) and are intended for the clip fastening of the adapter (19).

6. Sun visor according to at least one of Claims 1 to 5, **characterized in that** the bearing housing (1) is designed with undercuts and projections (11, 41) for the preassembly of the bearing device (45) on a finished roof lining (42) or the like.

7. Sun visor according to at least one of Claims 2 to 6, **characterized in that** the base plate (2) has a cup-like indentation (6) with an oval passage hole (7) for a fastening screw (44), which also passes through the adapter (19), and is furthermore designed with positioning domes.

8. Sun visor according to at least one of Claims 1 to 7, **characterized in that** the spindle body (16) has a cylindrical central part (37) with a flattened portion (22) which is restricted on one side, serves as a latching surface for the latching spring (17), has two ring-like bumps (23) as a displacement safeguard, two spindle pins (47) engaging in the sun visor body (21) and a flange (24) which likewise engages in the sun visor body (21).

9. Sun visor according to at least one of Claims 1 to 8, **characterized in that** the latching spring (17) is of U-shaped design and has a base limb having a rounded area corresponding to the U-shaped profile (3) of the bearing housing (1), **in that** a spring leg (35) of the latching spring (17) is kept relatively wide and the other spring leg (36) is kept relatively narrow, and **in that** the free ends of the spring legs (35, 36) have web-shaped shoulders (29, 30) which engage in slotted recesses (27, 28) in the adapter (19).

10. Sun visor according to at least one of Claims 2 to 9, **characterized in that** the adapter (19) comprises an approximately rectangular central part (26) with the slotted recesses (27, 28) and step-like shaped bodies (31) which adjoin it on the left and right and are intended for engaging in the U-shaped profile (3) and for latching behind the clip lugs (18), which protrude into the profiled channel (12), and has a spacer sleeve (33) and an oval passage hole (40) for the fastening screw (44).

## Revendications

1. Pare-soleil pour véhicules comprenant un corps de pare-soleil (21) qui présente, dans la partie centrale de son arête longitudinale supérieure un évidement (46) dans lequel est disposé un dispositif de palier (45) qui présente un axe (16) avec des tourillons (47) venant en prise dans le corps de pare-soleil (21) et un ressort d'encliquetage (17) serrant l'axe (16), ainsi qu'un logement de palier (1) pour recevoir le ressort d'encliquetage (17) et l'axe (16), **caractérisé en ce que** le logement de palier (1) sert en outre à recevoir un adaptateur (19) pouvant être fixé sur la carrosserie du véhicule, l'adaptateur (19) fixé par le biais d'assemblages par clipsage sur le logement de palier (1) portant le dispositif de palier (45) et le corps de pare-soleil (21) connecté à celui-ci de manière rabattable par le biais de l'axe (16).

2. Pare-soleil selon la revendication 1, **caractérisé en ce que** le logement de palier (1) se compose d'une plaque de base (2) ainsi que d'un profilé en U (3) connecté d'une pièce à celle-ci, dont la branche de base présente un arrondi (20).

3. Pare-soleil selon la revendication 1 ou 2,
**caractérisé en ce que** la plaque de base (2) du logement de palier (1) présente une bride (4) verticale, décalée par rapport au contour extérieur de la plaque de base et s'étendant parallèlement à celle-ci, qui est pourvue sur son côté longitudinal de nez en contre-dépouille (11).

4. Pare-soleil selon au moins l'une des revendications 2 à 3, **caractérisé en ce que** la plaque de base (2) du logement de palier (1) présente des nervures (5) qui s'étendent à l'intérieur du profilé en U (3) et forment des rehaussements (13).

5. Pare-soleil selon au moins l'une des revendications 2 à 4, **caractérisé en ce que** les parois du profilé en U (3) sont réalisées avec des nez de clipsage (18) saillant dans le canal profilé (12) pour la fixation par clipsage de l'adaptateur (19).

6. Pare-soleil selon au moins l'une des revendications 1 à 5, **caractérisé en ce que** le logement de palier (1) est réalisé avec des contre-dépouilles et des saillies (11, 41) pour le prémontage du dispositif de palier (45) sur un plafond terminé (42) ou similaire.

7. Pare-soleil selon au moins l'une des revendications 2 à 6, **caractérisé en ce que** la plaque de base (2) présente un renfoncement (6) en forme de pot avec un trou de passage ovale (7) pour une vis de fixation (44) traversant aussi l'adaptateur (19), et est en outre réalisée avec des dômes de positionnement.

8. Pare-soleil selon au moins l'une des revendications 1 à 7, **caractérisé en ce que** l'axe (16) présente une partie centrale cylindrique (37) avec un aplatissement limité d'un côté (22), qui sert de surface d'encliquetage pour le ressort d'encliquetage (17), deux rehaussements de type annulaire (23) servant de fixation contre le mouvement, deux tourillons (47) venant en prise dans le corps de pare-soleil (21) et une bride (24) venant en prise également dans le corps de pare-soleil (21).

9. Pare-soleil selon au moins l'une des revendications 1 à 8, **caractérisé en ce que** le ressort d'encliquetage (17) est réalisé en forme de U et présente une branche de base avec un arrondissement correspondant au profilé en U (3) du logement de palier (1), **en ce qu'**une branche (35) du ressort d'encliquetage (17) est relativement large et que l'autre branche (36) du ressort est relativement étroite et **en ce que** les extrémités libres des branches du ressort (35, 36) présentent des séparations en forme de pattes (29, 30) qui viennent en prise dans les évidements en forme de fente (27, 28) de l'adaptateur (19).

10. Pare-soleil selon au moins l'une des revendications 2 à 9, **caractérisé en ce que** l'adaptateur (19) se compose d'une partie centrale approximativement rectangulaire (26) avec les évidements en forme de fente (27, 28) et de corps moulés (31) en échelon s'y raccordant à droite et à gauche pour l'engagement dans le profilé en U (3) et pour l'encliquetage par l'arrière des nez de clipsage (18) pénétrant dans le canal profilé (12), et présente une gaine d'espacement (33) et un trou de passage ovale (40) pour la vis de fixation (44).
